# EUROPÄISCHE PATENTSCHRIFT

(11) **EP 3 301 125 B1**
(45) Veröffentlichungstag und Bekanntmachung des Hinweises auf die Patenterteilung: **10.05.2023**
(21) Anmeldenummer: 17192663.7
(22) Anmeldetag: 22.09.2017
(51) Int. Cl.: C08J 3/12, C08J 3/14, C08G 69/08, C08G 69/14, C08L 77/02, B29C 64/153, B29C 64/165, B33Y 70/00

(54) **POLYAMIDPULVER FÜR SELEKTIVE SINTERVERFAHREN**
POLYAMIDE POWDER FOR SELECTIVE SINTERING METHOD
POUDRE DE POLYAMIDE POUR PROCÉDÉ DE FRITTAGE SÉLECTIF

(30) Priorität: 30.09.2016 DE 102016219080
(43) Veröffentlichungstag der Anmeldung: 04.04.2018
(73) Patentinhaber: Evonik Operations GmbH, 45128 Essen (DE)
(72) Erfinder: Diekmann, Wolfgang, 45731 Waltrop (DE); Grebe, Maik, 44805 Bochum (DE); Baumann, Franz-Erich, 48249 Dülmen (DE); Monsheimer, Sylvia, 45721 Haltern am See (DE); Küting, Beatrice, 45772 Marl (DE)
(74) Vertreter: Evonik Patent Association

(56) Entgegenhaltungen:
- EP-A1- 1 642 923

## Beschreibung

Die vorliegende Erfindung betrifft Polyamidpulver für ihren Einsatz in Selective Absorbing Sintering, SAS, oder Selective Inhibition Sintering, SIS, und ihre Verwendung. Weiterhin betrifft die Erfindung Formkörper sowie deren Herstellung.

Generative Fertigungsverfahren, häufig auch als Additive Manufacturing oder Rapid Prototyping bezeichnet, werden eingesetzt, um dreidimensionale Objekte schnell und kostengünstig fertigen zu können. Diese Fertigung erfolgt direkt auf der Basis der rechnerinternen Datenmodelle aus formlosem (Flüssigkeiten, Pulver u. ä.) oder formneutralem (band-, drahtförmig) Material mittels chemischer und/oder physikalischer Prozesse. Insbesondere Polymerpulver wie Polyamidpulver eignen sich als formloses Material.

Die Powder Bed Fusion-Technologie umfasst unter anderem das Direkte Metall-Lasersintern (DMLS), das Elektronenstrahlschmelzen (EBM), das Selective Heat Sintering (SHS), das selektive Laserschmelzen (SLM), das selektive Lasersintern (SLS), das Selective Absorbing Sintering (SAS) und das Selective Inhibition Sintering (SIS). Das SAS-Verfahren wird beispielsweise in US 2007/238056 beschrieben. US 2004/137228 A1 stellt das SIS-Verfahren dar.

Die Selektivität der Verfahren ohne Laser kann beispielsweise durch Absorber (Selective Absorbing Sintering, SAS) oder Inhibitoren (Selective Inhibition Sintering, SIS) erfolgen. Beim SAS-Verfahren wird die Absorption des mit dem Absorber beaufschlagten Materials erhöht; im Gegensatz dazu verzögert der Inhibitor das Aufschmelzen. Absorber und Inhibitor können in einem Verfahren gemeinsam zum Einsatz kommen. Geeignete Energiequellen in SAS-Verfahren sind solche die nur bedingt in das Material einkoppeln. Beim SIS-Verfahren ist die Energiequelle so zu wählen, dass die Erwärmung des Materials ausreichend schnell erfolgt.

Absorber und Inhibitoren können in einer Flüssigkeit gelöst oder dispergiert, beispielsweise mittels Inkjetverfahren in Form von Tinten, auf das Material aufgebracht werden. Die Flüssigkeit bzw. Absorber und Inhibitor sollte nur von dem bedruckten Material aufgenommen und nicht im Material horizontal oder vertikal abfließen.

Durch den Einsatz des Polyamidpulvers bei der Formkörperherstellung, die üblicherweise 10 bis 20 K unterhalb der Schmelztemperatur stattfinden, können Alterungserscheinungen auftreten. Hierbei reagieren die Amin- und Carbonsäureendgruppen miteinander und sorgen für eine Verlängerung der Polyamidketten. Eine erneute Verarbeitung des Pulvers nicht mehr möglich ist, so dass das nicht verarbeitete Pulver auszutauschen ist.

Somit bestand die Aufgabe in der Bereitstellung eines Polyamidpulvers, welches in SAS- oder SIS-Verfahren eingesetzt werden kann, wobei das nicht verarbeitete Polyamidpulver erneut herangezogen werden kann. Hierdurch können Kosten reduziert und die Umwelt geschont werden. Die erhaltenen Formkörper sollten trotz des Einsatzes von Polyamidpulver aus vorherigen Formkörper-Herstellungen gleichbleibende Eigenschaften zeigen. Zudem sollten die Formkörper, die durch SAS oder SIS erhalten werden, gegenüber dem selektiven Lasersintern SLS eine deutlich verbesserte Mechanik wie erhöhte Reißdehnung aufweisen. EP1642923 beschreibt Polyamid 12-Pulver, welche in Powder Bed-Fusion-Verfahren eingesetzt werden. Die Polyamid-Pulver weisen eine Lösungsviskosität von 1,4 bis 2 auf.

Demnach wurden Polyamidpulver für Selective Absorbing Sintering, SAS, oder Selective Inhibition Sintering, SIS, gemäß der Ansprüche gefunden, die die Nachteile des Standes der Technik nicht aufweisen. Die Polyamide weisen eine Lösungsviskosität nach ISO 307 von 1,8 bis 2 auf. Zudem beträgt der Anstieg der Lösungsviskosität 0 bis 25 %, vorzugsweise 5 % bis 15 %, wenn das Polyamidpulver an der Luft für 20 h einer Temperatur ausgesetzt wird, die 20 °C unterhalb seiner Schmelztemperatur liegt.

Eine Temperatur von 20 °C unterhalb der Schmelztemperatur an der Luft für 20 h stellt Bedingungen nach, die in einem Bauraum zur Herstellung von Formkörpern herrschen. Die Aufgabe wurde gelöst durch ein Polyamidpulver, dass eine relativ hohe Anfangsviskosität aufweist und über den Zeitraum von 20 h lediglich einen geringen Anstieg der Lösungsviskosität zeigt. Dadurch lässt es sich mehrfach wiederverwenden.

Die Lösungsviskosität wird in einer Doppelbestimmung nach ISO 307 an Hand folgender Parameter bestimmt: Schott AVS Pro, Lösemittel m-Kresol sauer, volumetrisches Verfahren, Lösetemperatur 100 °C, Lösezeit 2 h, Polymerkonzentration 5 g/L, Messtemperatur 25 °C.

Zur Bestimmung des Anstiegs der Lösungsviskosität wird das Pulver für 20 h an der Luft einer Temperatur ausgesetzt, die 20 °C unterhalb seiner Schmelztemperatur liegt. Die Lösungsviskosität der jeweiligen Pulver wird im Anschluss wie zuvor genannt ermittelt.

Die Schmelztemperatur wird mittels Dynamischer Differenzkalorimetrie (DSC) nach DIN 53765 ermittelt. Maßgeblich ist die Schmelztemperatur des ersten Aufheizens. Die Heiz- und Kühlrate beträgt jeweils 20 K/min. Die Messungen erfolgten mittels DSC 7 von Perkin Elmar.

Das Polyamid weist Carbonsäureendgruppen im Überschuss auf. Der Überschuss kann durch Dicarbonsäuren erzielt werden. Bezogen auf die Masse des Polyamidpulvers beträgt der Überschuss der Carbonsäureendgruppen gegenüber den Aminendgruppen 20 bis 60 mmol/kg.

In einer bevorzugten Ausführungsform der Erfindung weist das Polyamidpulver offene Mesoporen auf, wobei die kumulative Porenvolumenverteilung der Mesoporen, gemessen nach DIN 66134, mindestens 0,01 cm³/g beträgt. Besonders bevorzugt liegt die kumulative Porenvolumenverteilung bei mindestens 0,025 cm³/g und ganz besonders bevorzugt bei mindestens 0,035 cm³/g. Weiter bevorzugte kumulative Porenvolumenverteilungen sind jeweils mindestens 0,045 cm³/g, 0,05 cm³/g, 0,06 cm³/g und 0,07 cm³/g. Bevorzugt beträgt die kumulative Porenvolumenverteilung maximal 0,15 cm³/g und besonders bevorzugt 0,1 cm³/g. In einer weiteren bevorzugten Ausführungsform der Erfindung beträgt die kumulative Porenvolumenverteilung 0,05 cm³/g bis 0,15 cm³/g, besonders bevorzugt 0,06 cm³/g bis 0,1 cm³/g.

Durch die offenen Poren gelangt Absorber oder Inhibitor von der Oberfläche in das Partikelinnere und kann damit eine gleichmäßigere Verteilung dieser Stoffe ermöglichen. Hierdurch erfolgt ein gleichmäßigeres Aufschmelzen. Zudem wird ein horizontales oder vertikales Verlaufen der Flüssigkeit vermieden, da die Flüssigkeit von den Partikeln - im Gegensatz zu einer oberflächlichen Absorption - in höherer Menge aufgenommen wird.

Die Poren erwirken durch Kapillarkräfte eine Aufnahme von Absorber bzw. Inhibitor in Form der Flüssigkeit. Die kumulative Porenvolumenverteilung von mindestens 0,01 cm³/g führt dazu, dass Absorber bzw. Inhibitor möglichst rasch aufgenommen werden, schließlich herrschen während des SAS- bzw. SIS-Verfahrens üblicherweise Temperaturen von über 100 °C, die zu einer schnellen Verdampfung der Flüssigkeit führen. Hierbei sollen Absorber bzw. Inhibitor nicht zerlaufen oder ineinanderlaufen. Würde die kumulative Porenvolumenverteilung unterhalb von mindestens 0,01 cm³/g liegen, würde die Flüssigkeit verdampfen, bevor Absorber oder Inhibitor in die Partikel eingedrungen wären. Damit würden Absorber wie im Stand der Technik an der Oberfläche der Partikel verbleiben, und der Inhibitor würde eine geringe Inhibitorleistung erbringen.

Offene Poren der Partikel stehe mit dem umgebenden Medium in Verbindung, wohingegen geschlossene Poren in sich abgeschlossen sind und kein Medium eindringen lassen. Feinporen mit einem Durchmesser von 20 µm oder weniger werden von der IU-PAC unterteilt in Makroporen (> 50 nm), Mesoporen (2 - 50 nm) und Mikroporen (< 2 nm). Ein bevorzugtes Polyamidpulver weist mindestens 30 %, besonders bevorzugt mindestens 50 %, offene Mesoporen auf, bezogen auf die Summe an offenen Makro- und Mesoporen der Polyamidpulver mit einem Porendurchmesser von 2 bis 300 nm, gemessen nach DIN 66134. Die Norm gilt für mesoporöse Feststoffe, allerdings wurde der Bereich oberhalb von 50 nm ebenfalls gemäß dieser Norm ermittelt.

Polyamide mit Mikroporen sind weniger geeignet, da sie die Flüssigkeit nicht rasch genug und übliche Absorber gar nicht aufnehmen können. Makroporen können eine verringerte Kapillarwirkung zeigen und führen ebenfalls nicht dazu, dass die Flüssigkeit, die Absorber oder Inhibitor enthält, schnell genug in das Partikel innere absorbiert wird.

Das Polyamidpulver nimmt vorzugsweise 1000 pL bis 30000 pL Flüssigkeit pro g Polyamidpulver auf, vorzugsweise 3000 pL bis 25000 pL und bevorzugt 5000 pL bis 20000 pL.

Als Flüssigkeit ist üblicherweise jede druckbare Flüssigkeit geeignet, welche Absorber beinhaltet bzw. als Inhibitor fungiert. Die Flüssigkeit, in die der Absorber oder der Inhibitor gelöst oder dispergiert ist, wird vorzugsweise aus den Lösemitteln Wasser, Monoalkoholen mit 1 bis 4 C-Atomen, Glykol oder Mischungen daraus ausgewählt.

In einer Ausführungsform der Erfindung weist das Polyamidpulver entweder Absorber oder Inhibitoren auf. Hierzu ist Polyamidpulver mit der zuvor beschriebenen Flüssigkeit beaufschlagt worden. Dies kann beispielsweise durch bekannte Druckverfahren erfolgen.

Die Absorber oder Inhibitoren können Farbmittel sein. Farbmittel ist der Oberbegriff für alle farbgebenden Substanzen. Sie lassen sich nach DIN 55944:1990-04 nach ihrer Löslichkeit im umgebenden Medium in Farbstoffe und Pigmente einteilen. Farbstoffe sind organische, im umgebenden Medium lösliche schwarze oder bunte Substanzen. Pigmente hingegen sind pulver- oder plättchenförmige Farbmittel, die im Gegensatz zu Farbstoffen im umgebenden Medium unlöslich sind. Die Partikelgröße beträgt üblicherweise 30 bis 200 nm (Laserbeugung). Vorzugsweise ist das Farbmittel ein Pigment. Vorzugsweise wird das Pigment aus der Gruppe, bestehend aus organischen und anorganischen, farbgebenden, effektgebenden, farb- und effektgebenden, magnetisch abschirmenden, elektrisch leitfähigen, korrosionshemmenden, fluoreszierenden und phosphoreszierenden Pigmenten, ausgewählt. Vorzugsweise werden die farb- und/oder effektgebenden Pigmente verwendet.

Geeignete Pigmente sind ausgewählt aus Kreide, Ocker, Umbra, Grünerde, Terra di Siena gebrannt, Graphit, Titanweiß (Titandioxid), Bleiweiß, Zinkweiß, Lithopone, Antimonweiß, Ruß, Eisenoxidschwarz, Manganschwarz, Cobaltschwarz, Antimonschwarz, Bleichromat, Mennige, Zinkgelb, Zinkgrün, Cadmiumrot, Cobaltblau, Berliner Blau, Ultramarin, Manganviolett, Cadmiumgelb, Schweinfurter Grün, Molybdatorange, Molybdatrot, Chromorange, Chromrot, Eisenoxidrot, Chromoxidgrün, Strontiumgelb, Metalleffektpigmenten, Perlglanzpigmenten, Leuchtpigmenten mit Fluoreszenz- und/oder Phosphoreszenzpigmenten, Umbra, Gummigutt, Knochenkohle, Kasseler Braun, Indigo, Chlorophyll, Azofarbstoffen, Indigoide, Dioxazinpigmenten, Chinacridonpigmenten, Phthalocyaninpigmenten, Isoindolinonpigmenten, Perylenpigmenten, Perinonpigmenten, Metallkomplexpigmenten, Alkaliblaupigmenten und Diketopyrrolopyrrol.

Um eine bessere Verarbeitbarkeit des Polyamidpulvers zu erreichen, kann es vorteilhaft sein, dass Additive hinzugefügt werden. Derartige Additive können z. B. Rieselhilfen sein. Besonders bevorzugt weist das das Polyamidpulver 0,05 bis 5 Gew.-%, vorzugsweise von 0,1 bis 1 Gew.-%, bezogen auf das Gesamtgewicht des Polyamidpulvers, an Additiven auf. Rieselhilfen können z. B. pyrogene Kieselsäuren, Stearate oder andere literaturbekannte Rieselhilfen, wie z. B. Tricalciumphosphat, Calciumsilicate, Al₂O₃, MgO, MgCOs oder ZnO sein. Pyrogene Kieselsäure wird beispielsweise unter dem Markennamen Aerosil^{®} von Evonik Industries AG angeboten.

Neben oder an Stelle von solchen zum Teil anorganischen Rieselhilfen oder anderen Additiven kann das Polyamidpulver auch anorganische Füllkörper aufweisen. Die Verwendung solcher Füllkörper hat den Vorteil, dass diese ihre Form durch die Behandlung beim Verbinden im Wesentlichen beibehalten und somit den Schrumpf des Formkörpers verringern. Zudem ist es durch die Verwendung von Füllkörpern z. B. möglich, die plastischen und physikalischen Eigenschaften der Objekte zu verändern. So können durch Verwendung von Pulvermaterial, welches Metallpulver aufweist, sowohl die Transparenz und Farbe als auch die magnetischen oder elektrischen Eigenschaften des Objektes eingestellt werden. Als Füllstoffe bzw. -körper kann das Pulvermaterial z. B. Glaspartikel, Keramikpartikel oder Metallpartikel aufweisen. Typische Füllstoffe sind z. B. Metallgriese, Aluminiumpulver, Stahl- oder Glaskugeln. Besonders bevorzugt werden Pulvermaterialien eingesetzt, die als Füllkörper Glaskugeln aufweisen. In einer bevorzugten Ausführungsvariante weist das erfindungsgemäße Pulvermaterial von 1 bis 70 Gew.-%, vorzugsweise von 5 bis 50 Gew.-% und ganz besonders bevorzugt von 10 bis 40 Gew.-% an Füllkörpern auf, bezogen auf das Gesamtgewicht des Polyamidpulvers.

Die Oberflächenenergie der Flüssigkeit sollte geringer sein als die Oberflächenenergie des Polyamidpulvers.

Die Flüssigkeit enthält das Farbmittel vorzugsweise in Anteilen von 0,1 bis 10 Gew.-%, besonders bevorzugt 2,5 bis 5 Gew.-%, bezogen auf das Gesamtgewicht der Flüssigkeit. Der pH-Wert der Flüssigkeit wird üblicherweise auf 6 bis 9 eingestellt.

Geeignete Flüssigkeiten können handelsübliche Tinten sein, die für den Tintendruck angeboten werden.

Die Polyamide oder Co-Polyamide sind ausgewählt aus Polyamid 6, 11, 12, 1013, 1012, 66, 46, 613, 106, 11/1010, 1212 und 12/1012. Ein bevorzugtes Polyamid ist ausgewählt aus Polyamid 11, 12, 1013, 1012, 11/1010, 1212 und 12/1012, besonders bevorzugt Polyamid 11 oder 12, und ganz besonders bevorzugt Polyamid 12.

Üblicherweise soll ein Polyamidpulver, das in Sinterverfahren eingesetzt wird, eine möglichst geringe BET-Oberfläche aufweisen. Im Stand der Technik wird offenbart, dass der Wert beispielsweise weniger als 7 m²/g zeigen soll. Das erfindungsgemäße Polyamidpulver hingegen sollte vorzugsweise eine BET-Oberfläche, gemessen nach DIN ISO 9277, von mindestens 7 m²/g, bevorzugt von 7,5 m²/g bis 30 m²/g, aufweisen. Zu einer besonders bevorzugten Ausführungsform zählen Polyamide mit einer BET-Oberfläche von mindestens 7 m²/g, vorzugsweise von 7,5 m²/g bis 30 m²/g. Die Messung erfolgt mit dem Gerät Micromeritics TriStar 3000, Gasadsorption von Stickstoff, diskontinuierliches, volumetrisches Verfahren, 7 Messpunkte bei Relativdrücken P/P0 zwischen ca. 0,05 und ca. 0,20, Kalibrierung des Totvolumens mittels He (99,996 %), Probenvorbereitung 1 h bei 23 °C + 16 h bei 80 °C unter Vakuum, spezifische Oberfläche auf die entgaste Probe bezogen, Auswertung erfolgte mittels Mehrpunktbestimmung.

In einer bevorzugten Ausführungsform weist das Polyamidpulver eine kumulative Porenvolumenverteilung von mindestens 0,02 cm³/g und eine BET-Oberfläche von mindestens 2,8 m²/g auf, vorzugswiese 0,04 cm³/g bis 5,8 m²/g, bevorzugt 0,05 cm³/g bis 10 m²/g und besonders bevorzugt von 0,07 cm³/g bis 13 m²/g.

Der gewichtsmittlere Korndurchmesser d₅₀ des Polyamidpulvers, gemessen mittels Laserbeugung, soll vorzugsweise nicht mehr als 100 µm, vorzugsweise 10 µm bis 80 µm, betragen (Malvern Mastersizer 3000; die Nassdispergierung erfolgte in Wasser, Brechungsindex und Blaulichtwert festgelegt mit 1,52; Auswertung über Mie-Theorie; Trockenmessung, 20-40g Pulver mittels Scirocco Trockendispergiergerät zudosiert; Zuführrate Rüttelrinne 70%, Dispergierluftdruck 3 bar; Messzeit der Probe 5 Sekunden (5000 Einzelmessungen)). Polymere mit derartigen Durchmessern werden auch als Polymerpulver bezeichnet.

Es ist von Vorteil, wenn das Polyamidpulver mit einem Partikeldurchmesser von weniger als 10,48 µm (Feinstpartikel) in geringer Menge vorhanden ist. Der Anteil an Feinstpartikel sollte weniger als 3 Gew.-%, bevorzugt weniger als 1,5 Gew.-% und besonders bevorzugt weniger als 0,75 Gew.-%, jeweils bezogen auf das Gesamtgewicht an Polyamidpulver, betragen. Hierdurch wird die Staubentwicklung reduziert und eine Verbesserung der Verarbeitbarkeit (Prozessierbarkeit) ermöglicht. Die Abtrennung von Feinstpartikeln kann beispielsweise mittels Sichtung erfolgen.

Weiterhin sind Polyamidpulver bevorzugt, deren Schüttdichte, gemessen nach DIN 53466, zwischen 300 g/L und 600 g/L liegt.

Weiterhin stellen Polyamide mit einer Oberflächenenergie von nicht mehr als 35 mN/m, vorzugsweise von 25 mN/m bis 32 mN/m, bevorzugte Polyamide dar. Die Oberflächennergie wird ermittelt mittels Kontaktwinkelmessung nach der Kapillarsteighöhenmethode durch Einsatz der Washburn-Gleichung und dem Auswerteverfahren nach Owens, Wendt, Rabel und Kaelble. Derartige Polyamidpulver weisen eine möglichst gleichmäßige Fließfähigkeit auf, die in einer hohen Formstabilität der Formkörper resultiert.

Das Polyamidpulver und seine Zusammensetzung können durch einen Mahlen des hergestellten Pulvers oder durch einen Fällprozess (Umfällung) erhalten werden. Die durch den bevorzugten Fällprozess erhaltenen Polyamidpulver kennzeichnen sich üblicherweise durch eine höhere kumulative Porenvolumenverteilung als Polyamide, die beispielsweise durch Mahlverfahren gewonnen werden. Polyamide, die nicht durch ein Fällprozess, sondern insbesondere durch Mahlverfahren erhalten werden, weisen eine kumulative Porenvolumenverteilung von in der Regel deutlich unter 0,01 cm³/g auf.

In dem Fällprozess wird das Polyamid unter Einwirkung erhöhter Temperatur zumindest teilweise gelöst und anschließend durch Temperaturverringerung ausgefällt. Geeignete Lösemittel für Polyamide sind beispielsweise Alkohole wie Ethanol. US5932687 nennt beispielsweise geeignete Prozessbedingungen. Zur Einstellung der gewünschten Eigenschaft ist es vorteilhaft, die erhaltene Suspension nach der Ausfällung 10 min bis 180 min bei einer Temperatur 2-4 K oberhalb der Fälltemperatur zu belassen.

Ein weiterer Gegenstand der Erfindung ist ein Verfahren zur Herstellung des zuvor genannten Polyamidpulvers. Es umfasst die Polymerisation und/oder Polykondensation von Monomeren zu einem Polyamid (Schritt a) und die Pulverherstellung durch Mahlen oder Umfällen (Schritt b). Im Schritt a wird Dicarbonsäuren zur Erzielung eines Carbonsäureendgruppenüberschusses als Regler zugegeben. Die Dicarbonsäuren werden in einem Verhältnis zugegeben, dass ein Überschuss an Carbonsäureendgruppen 20 bis 60 mmol/kg beträgt (bezogen auf die Masse des Polyamidpulvers).

Geeignete Monomere sind beispielsweise Monomere, die zur Herstellung der Polyamide 6, 11, 12, 1013, 1012, 66, 46, 613, 106, 11/1010, 1212 und 12/1012 geeignet sind.

Geeignete Diamine und Dicarbonsäuren zur Einstellung des Überschusses an Endgruppen können gleich oder verschieden sein zu den Monomeren der Polyamide. Exemplarisch seien Tetramethylendiamin, Hexamethylendiamin, Decandiamin, Dodecandiamin, Adipinsäure, Sabacinsäure, Dodecansäure, Brassylsäure genannt. Es ist bevorzugt, dass die Diamine bzw. Dicarbonsäuren die gleiche Anzahl an Kohlenstoffatomen aufweisen wie die Monomere der Polyamide.

In einer Ausführungsform der Erfindung kann das Polyamid durch Cofällung erhalten werden. Hierzu wird in Schritt a) zumindest ein Polyamid des AB-Typs, hergestellt durch Polymerisation von Lactamen mit 4 bis 14 Kohlenstoffatomen in der Monomereinheit oder durch Polykondensation der entsprechenden ω-Aminocarbonsäuren mit 4 bis 14 Kohlenstoffatomen in der Monomereinheit und zumindest ein Polyamid des AABB-Typs, hergestellt durch Polykondensation von Diaminen und Dicarbonsäuren mit jeweils 4 bis 14 Kohlenstoffatomen in den Monomereinheiten, erhalten. Hierbei wird das Pulver in Schritt b) durch gemeinsame Fällung des zumindest einen Polyamids des AB-Typs und des zumindest einen Polyamids des AABB-Typs erhalten.

Ein weiterer Gegenstand der Erfindung ist die Verwendung des erfindungsgemäßen Polyamidpulvers in SAS- oder SIS-Verfahren zur Herstellung von Formkörpern. Hierbei ist es bevorzugt, das Polyamidpulver mit der Flüssigkeit zu beaufschlagen.

Weiterhin bilden Formkörper, die zumindest teilweise aus erfindungsgemäßen Polyamidpulvern erhalten werden, einen weiteren Gegenstand der Erfindung. Darüber hinaus sind Verfahren zur Herstellung von Formkörpern mittels SAS- oder SIS-Verfahren, wobei das erfindungsgemäße Polyamidpulver eingesetzt wird, ebenfalls Gegenstand der Erfindung.

### Beispiel

Es wurde ein Polyamid 12 hergestellt. Neben Laurinlactam als Monomer wurde Dodecansäure eingesetzt, um einen Überschuss an Dicarbonsäureendgruppen zu erhalten. Das Pulver wurde mittels Fällprozess erhalten.

Die Schmelztemperatur und die Lösungsviskosität des erhaltenen Pulvers wurden bestimmt. Im Anschluss wurde das Pulver für 20 h an der Luft einer Temperatur ausgesetzt, die 20 °C unterhalb seiner Schmelztemperatur liegt und die Lösungsviskosität laufend ermittelt.
Schmelztemperatur: 185 °C
Temperatur zur Nachstellung der Alterung: 165 °C

| **Zeit / h** | **Lösungsviskosität** |
|---|---|
| 0 | 1,88 |
| 1 | 1,99 |
| 2 | 2,02 |
| 4 | 2,05 |
| 8 | 2,08 |
| 20 | 2,07 |

## Patentansprüche

1. Polyamidpulver für Selective Absorbing Sintering, SAS, oder Selective Inhibition Sintering, SIS, wobei das Polyamid ausgewählt ist aus Polyamid 6, 11, 12, 1013, 1012, 66, 46, 613, 106, 11/1010, 1212 und 12/1012, wobei das Polyamid eine Lösungsviskosität in m-Kresol nach ISO 307 von 1,8 bis 2 und einen Anstieg der Lösungsviskosität von 0 % bis 25 %, vorzugsweise 5 % bis 15 %, aufweist, wenn es an der Luft für 20 h einer Temperatur ausgesetzt wird, die 20 °C unterhalb seiner Schmelztemperatur liegt, und wobei im Polyamid Carbonsäureendgruppen im Überschuss vorliegen, **dadurch gekennzeichnet, dass** der Überschuss der Carbonsäureendgruppen gegenüber den Aminendgruppen 20 bis 60 mmol/kg Polyamidpulver beträgt.

2. Polyamidpulver nach Anspruch 1, **dadurch gekennzeichnet, dass** der Überschuss durch Diamine oder Dicarbonsäuren, bevorzugt Dicarbonsäuren, erzielt wird.

3. Polyamidpulver nach einem der vorherigen Ansprüche, **dadurch gekennzeichnet, dass** das Pulver offene Mesoporen aufweist und die kumulative Porenvolumenverteilung der Mesoporen, gemessen nach DIN 66134, mindestens 0,01 cm³/g beträgt.

4. Polyamidpulver nach einem der vorherigen Ansprüche, **dadurch gekennzeichnet, dass** das Polyamidpulver Flüssigkeit in einem Volumen von 1000 pL/g bis 30000 pL/g aufnimmt.

5. Polyamidpulver nach einem der vorherigen Ansprüche, **dadurch gekennzeichnet, dass** die BET-Oberfläche des Polyamidpulvers, gemessen nach DIN ISO 9277, mindestens 7 m²/g, vorzugsweise 10 m²/g bis 30 m²/g, aufweist.

6. Polyamidpulver nach einem der vorherigen Ansprüche, **dadurch gekennzeichnet, dass** der gewichtsmittlere Korndurchmesser d₅₀ des Polyamidpulvers, gemessen mittels Laserbeugung, nicht mehr als 100 µm, vorzugsweise 10 µm bis 80 µm, beträgt.

7. Polyamidpulver nach einem der vorherigen Ansprüche, **dadurch gekennzeichnet, dass** die Schüttdichte, gemessen nach DIN 53466, zwischen 300 g/L und 600 g/L liegt.

8. Polyamidpulver nach einem der vorherigen Ansprüche, **dadurch gekennzeichnet, dass** die Oberflächenenergie der Polyamide, ermittelt mittels Kontaktwinkelmessung nach der Kapillarsteighöhenmethode durch Einsatz der Washburn-Gleichung und dem Auswerteverfahren nach Owens, Wendt, Rabel und Kaelble, nicht mehr als 35 mN/m, vorzugsweise 25 mN/m bis 32 mN/m, beträgt

9. Polyamidpulver nach einem der vorherigen Ansprüche, **dadurch gekennzeichnet, dass** es durch einen Fällprozess erhalten wird.

10. Verfahren zur Herstellung eines Polyamidpulvers nach einem der vorherigen Ansprüche, umfassend die Schritte
a) Polymerisation und/oder Polykondensation von Monomeren zu einem Polyamid,
b) Pulverherstellung durch Mahlen oder Umfällen,
**dadurch gekennzeichnet, dass** in Schritt a) Dicarbonsäuren zur Erzielung eines Carbonsäureendgruppenüberschusses als Regler zugegeben werden, wobei die Dicarbonsäuren in einem Verhältnis zugegeben werden, um einen Überschuss von 20 bis 60 mmol/kg an Carbonsäureendgruppen (bezogen auf die Masse des Polyamidpulvers) zu erreichen

11. Verwendung eines Polyamidpulvers nach einem der Ansprüche 1 bis 9 in SAS- oder SIS-Verfahren zur Herstellung von Formkörpern.

12. Formkörper, die zumindest teilweise aus einem Polyamidpulver nach einem der Ansprüche 1 bis 9 erhalten werden.

13. Verfahren zur Herstellung von Formkörpern mittels SAS- oder SIS-Verfahren, **dadurch gekennzeichnet, dass** ein Polyamidpulver nach einem der Ansprüche 1 bis 9 eingesetzt wird.

## Claims

1. Polyamide powder for selective absorbing sintering, SAS, or selective inhibition sintering, SIS, where the polyamide is selected from nylon-6, -11, -12, -10,13, -10,12, -6,6, -4,6, -6,13, -10,6, -11/10,10, -12,12 and -12/10,12, where the polyamide has a solution viscosity in m-cresol to ISO 307 of 1.8 to 2 and a rise in the solution viscosity of 0% to 25%, preferably 5% to 15%, when it is subjected to a temperature 20°C below its melting temperature under air for 20 h, and where carboxylic acid end groups are present in excess in the polyamide, **characterized in that** the excess of the carboxylic acid end groups over the amine end groups is 20 to 60 mmol/kg of polyamide powder.

2. Polyamide powder according to Claim 1, **characterized in that** the excess is achieved by means of diamines or dicarboxylic acids, preferably dicarboxylic acids.

3. Polyamide powder according to either of the preceding claims, **characterized in that** the powder has open mesopores and the cumulative pore volume distribution of the mesopores, measured to DIN 66134, is at least 0.01 cm³/g.

4. Polyamide powder according to any of the preceding claims, **characterized in that** the polyamide powder absorbs liquid in a volume of 1000 pl/g to 30 000 pl/g.

5. Polyamide powder according to any of the preceding claims, **characterized in that** the BET surface area of the polyamide powder, measured to DIN ISO 9277, is at least 7 m²/g, preferably 10 m²/g to 30 m²/g.

6. Polyamide powder according to any of the preceding claims, **characterized in that** the weight-average particle diameter d₅₀ of the polyamide powder, measured by means of laser diffraction, is not more than 100 µm, preferably 10 µm to 80 µm.

7. Polyamide powder according to any of the preceding claims, **characterized in that** the bulk density, measured to DIN 53466, is between 300 g/l and 600 g/l.

8. Polyamide powder according to any of the preceding claims, **characterized in that** the surface energy of the polyamides, determined by means of contact angle measurement by the capillary rise height method by use of the Washburn equation and the evaluation method according to Owens, Wendt, Rabel and Kaelble is not more than 35 mN/m, preferably 25 mN/m to 32 mN/m.

9. Polyamide powder according to any of the preceding claims, **characterized in that** it is obtained by a precipitation process.

10. Process for producing a polyamide powder according to any of the preceding claims, comprising the steps of
a) polymerizing and/or polycondensing monomers to give a polyamide,
b) producing powder by grinding or reprecipitation,
**characterized in that** dicarboxylic acids are added as chain transfer agent in step a) to achieve a carboxylic acid end group excess, where the dicarboxylic acids are added in a ratio to achieve an excess of 20 to 60 mmol/kg of carboxylic end groups (based on the mass of the polyamide powder).

11. Use of a polyamide powder according to any of Claims 1 to 9 in SAS or SIS methods for production of shaped bodies.

12. Shaped bodies which are obtained at least partly from a polyamide powder according to any of Claims 1 to 9.

13. Process for producing shaped bodies by means of SAS or SIS methods, **characterized in that** a polyamide powder according to any of Claims 1 to 9 is used.

## Revendications

1. Poudre de polyamide pour frittage absorbant sélectif, SAS, ou frittage à inhibition sélective, SIS, le polyamide étant choisi parmi un polyamide 6, 11, 12, 1013, 1012, 66, 46, 613, 106, 11/1010, 1212 et 12/1012, le polyamide présentant une viscosité en solution dans le m-crésol selon la norme ISO 307 de 1,8 à 2 et une augmentation de la viscosité en solution de 0 % à 25 %, de préférence 5 % à 15 %, lorsqu'il est exposé à l'air pendant 20 h à une température qui se situe 20 °C en dessous de sa température de fusion, et des groupes terminaux d'acide carboxylique étant présents en excès dans le polyamide, **caractérisée en ce que** l'excès de groupes terminaux d'acide carboxylique, par rapport aux groupes terminaux amine, est de 20 à 60 mmole/kg de poudre de polyamide.

2. Poudre de polyamide selon la revendication 1, **caractérisée en ce que** l'excès est atteint par des diamines ou des acides dicarboxyliques, préférablement des acides dicarboxyliques.

3. Poudre de polyamide selon l'une quelconque des revendications précédentes, **caractérisée en ce que** la poudre présente des mésopores ouverts et la distribution volumique de pores cumulative des mésopores, mesurée selon la norme DIN 66134, est d'au moins 0,01 cm³/g.

4. Poudre de polyamide selon l'une quelconque des revendications précédentes, **caractérisée en ce que** la poudre absorbe du liquide en un volume de 1 000 pL/g à 30 000 pL/g.

5. Poudre de polyamide selon l'une quelconque des revendications précédentes, **caractérisée en ce que** la surface BET de la poudre de polyamide, mesurée selon la norme DIN ISO 9277, est d'au moins 7 m²/g, de préférence 10 m²/g à 30 m²/g.

6. Poudre de polyamide selon l'une quelconque des revendications précédentes, **caractérisée en ce que** le diamètre moyen de grain en poids d₅₀ de la poudre de polyamide, mesuré au moyen d'une diffraction laser, n'est pas supérieur à 100 µm, de préférence est de 10 µm à 80 µm.

7. Poudre de polyamide selon l'une quelconque des revendications précédentes, **caractérisée en ce que** la densité apparente, mesurée selon la norme DIN 53466, se situe entre 300 g/L et 600 g/L.

8. Poudre de polyamide selon l'une quelconque des revendications précédentes, **caractérisée en ce que** l'énergie de surface des polyamides, mesurée au moyen d'une mesure d'angle de contact d'après la méthode de montée capillaire par l'utilisation de l'équation de Washburn et du procédé d'évaluation selon Owens, Wendt, Rabel et Kaelble, n'est pas supérieure à 35 mN/m, de préférence est de 25 mN/m à 32 mN/m.

9. Poudre de polyamide selon l'une quelconque revendication précédentes, **caractérisée en ce qu'**elle est obtenue par un processus de précipitation.

10. Procédé de préparation d'une poudre de polyamide selon l'une quelconque des revendications précédentes, comprenant les étapes
a) polymérisation et/ou polycondensation de monomères pour donner un polyamide,
b) préparation de poudre par broyage ou précipitation,
**caractérisé en ce que** dans l'étape a), des acides dicarboxyliques sont ajoutés comme régulateurs pour atteindre un excès de groupes terminaux d'acide carboxylique, les acides dicarboxyliques étant ajoutés en un rapport pour atteindre un excès de groupes terminaux d'acide carboxylique de 20 à 60 mmole/kg (par rapport à la masse de la poudre de polyamide).

11. Utilisation d'une poudre de polyamide selon l'une quelconque des revendications 1 à 9 dans un procédé SAS ou SIS pour la préparation de corps moulés.

12. Corps moulés qui sont obtenus au moins partiellement à partir d'une poudre de polyamide selon l'une quelconque des revendications 1 à 9.

13. Procédé de préparation de corps moulés au moyen d'un procédé SAS ou SIS, **caractérisé en ce qu'**une poudre de polyamide selon l'une quelconque des revendications 1 à 9 est utilisée.
